# EUROPEAN PATENT APPLICATION

(11) **EP 4 663 435 A1**
(43) Date of publication of application: **17.12.2025**
(21) Application number: 25181907.4
(22) Date of filing: 10.06.2025
(51) Int. Cl.: B60C 29/00, B60C 29/02, F16K 15/20

(54) **TIRE VALVE ASSEMBLY**

(30) Priority: 14.06.2024 US 202463660162 P
(71) Applicant: Specialized Bicycle Components, Inc., Morgan Hill, CA 95037 (US)
(72) Inventor: Teixeira IV, Charles Raymond, Bonny Doon (US)
(74) Representative: Forresters IP LLP

(57) **Abstract**

A tire valve assembly includes a valve stem defining a hollow interior and a valve positioned within the hollow interior. The valve is manually movable between a closed position to inhibit movement of fluid through the valve stem and an open position to facilitate movement of fluid through the valve stem to inflate the tire.

## Description

### CROSS-REFERENCE TO RELATED APPLICATIONS

This application claims priority to U.S. Provisional Patent Application No. 63/660,162, filed June 14, 2024.

### BACKGROUND

The present disclosure relates generally to the field of bicycle wheels and specifically to tire valve assemblies.

Bicycle wheels commonly include an axle, a hub rotatable on the axle, spokes extending radially from the hub, a rim supported by the spokes, and a tire. Some wheels include a pneumatic tube positioned inside the tire to facilitate inflation of the tire, while other wheels are "tubeless." Tubeless wheels commonly include one or more holes in the rim and a tire valve assembly that is inserted through the hole or holes in a radially inward direction such that the tire valve extends from the rim toward the axle. In many examples, the tire valve may be inserted or extend radially inwardly through a first hole in a well portion (e.g., wall) of the rim (over which the tire is mounted) and, in some examples, through a second hole in an exterior portion (.e.g., wall) of the rim (usually at a portion of the exterior portion that is radially inward of the well surface such as a nose portion of the exterior portion).

### BRIEF DESCRIPTION OF THE DRAWINGS

FIG. 1 is a side view of a bicycle according to an embodiment.
FIG. 2 is an exploded view of a tire valve assembly of the bicycle of FIG. 1.
FIG. 3 is a perspective view of the tire valve assembly in a closed position.
FIG. 4 is a section view of the tire valve assembly taken along line 4-4 in FIG. 3.
FIG. 5 is a perspective view of the tire valve assembly in an opened position.
FIG. 6 is a section view of the tire valve assembly taken along line 6-6 in FIG. 5.
FIG. 7 is an enlarged section view of a valve cap of the tire valve assembly in a first position relative to the valve stem.
FIG. 8 is a side view of a main cap body of the valve cap.
FIG. 9 is an end view of the main cap body, illustrating an interior surface of the main cap body.
FIG. 10 is a perspective view of the main cap body, further illustrating the interior surface of the main cap body.
FIG. 11 is an enlarged section view of the valve cap in a second position relative to the valve stem.

### DETAILED DESCRIPTION

Before any constructions of the disclosure are explained in detail, it is to be understood that the disclosure is not limited in its application to the details of construction and the arrangement of components set forth in the following description or illustrated in the accompanying drawings. The disclosure is capable of supporting other constructions and of being practiced or of being carried out in various ways.

According to an exemplary embodiment, a tire valve assembly for a tire includes a valve stem defining a hollow interior and a valve positioned within the hollow interior. The valve is manually movable between a closed position to inhibit movement of fluid through the valve stem and an open position to facilitate movement of fluid through the valve stem to inflate the tire.

According to another exemplary embodiment, a tire valve assembly for a tire includes a valve stem defining a hollow interior and a valve cap coupled to the valve stem. The valve cap includes a main cap body and a seal coupled to the main cap body. The valve cap is adjustable relative to the valve stem between a first position where the seal is pressed against the valve stem to inhibit a flow of fluid out of the hollow interior, and a second position where the seal is spaced away from the valve stem to facilitate a limited flow of fluid out of the hollow interior.

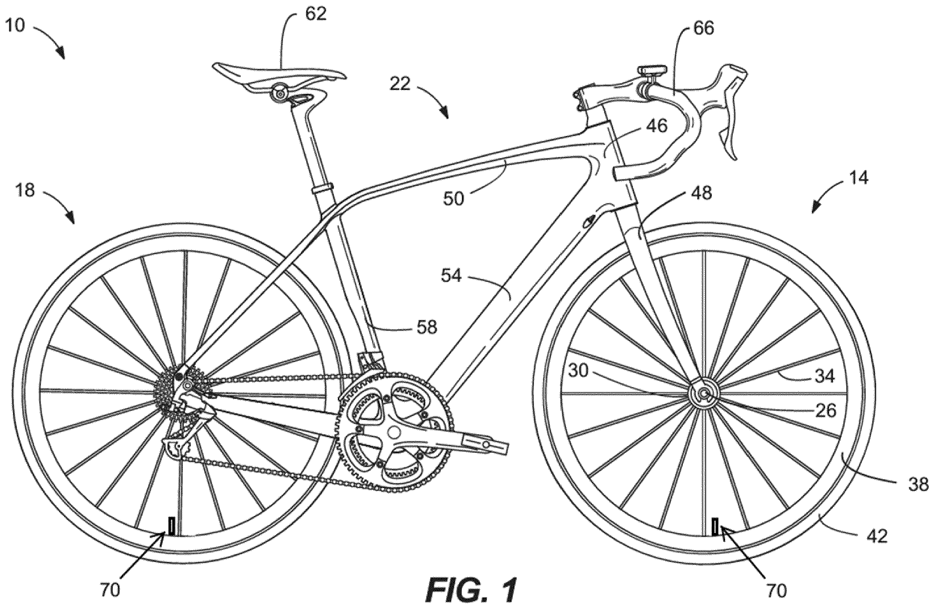

FIG. 1 illustrates a bicycle 10. The bicycle 10 may include a front wheel 14, a rear wheel 18, and a frame 22 supported by the front wheel 14 and the rear wheel 18. The bicycle 10 may be any type of bicycle, including but not limited to a mountain bicycle, a road bicycle, a gravel bicycle, a pedal bicycle, and/or an electric bicycle.

In some examples, one or both of the front wheel 14 and the rear wheel 18 may include an axle 26, a hub 30 rotationally supported on the axle 26, spokes 34 extending radially from the hub 30, a rim assembly 38 secured to the ends of the spokes 34 opposite the ends secured to the hub 30, and/or a tire 42 supported on the rim assembly 38.

As illustrated in FIG. 1, the frame 16 itself may include a head tube 46, a front fork 48 rotationally supported by the head tube 46 and coupled to the front wheel 14, a top tube 50 coupled to and extending rearwardly from the head tube 46, and/or a down tube 54 coupled to the head tube 46 below the top tube 50 and extending generally downward toward a bottom bracket (not shown) of the frame 22. A seat tube 58 may extend upward (e.g., from the bottom bracket) and may be coupled to the top tube 50. A seat 62 may be supported by the seat tube 58. The bicycle 10 may also include a handlebar 66 for turning the front wheel 14 via the front fork 48. Other examples of the bicycle 10 may include other types or arrangements of frame components than that illustrated.

With continued reference to FIG. 1, the bicycle 10 may include one or more valve assemblies. For example, the bicycle 10 and/or the one or more valves assemblies may include the valve assemblies 70 (illustrated schematically in FIG. 1) or be similar or identical to the valve assemblies 70. Further, the valve assemblies 70 may be similar or identical to each other. The valve assemblies 70 may be used, for example, with the front wheel 14, the rear wheel 18, and/or with a different wheel of a different bicycle, to inflate a tire or tires (e.g., the tire 42 on the front wheel 14) thereof. While the valve assemblies 70 are illustrated being used with tubeless wheels, in other example the valve assemblies 70 may be used with wheels having, for example, a pneumatic tube positioned inside a tire, to inflate the pneumatic tube. Accordingly, the valve assembly 70 is not limited to use with the specific bicycle 10 or wheels illustrated in FIG. 1. In further examples, valve assemblies similar or identical to the valve assemblies 70 may be used in connection with pneumatic tires of wheels for other types of vehicles for which pneumatic tires are suitable.

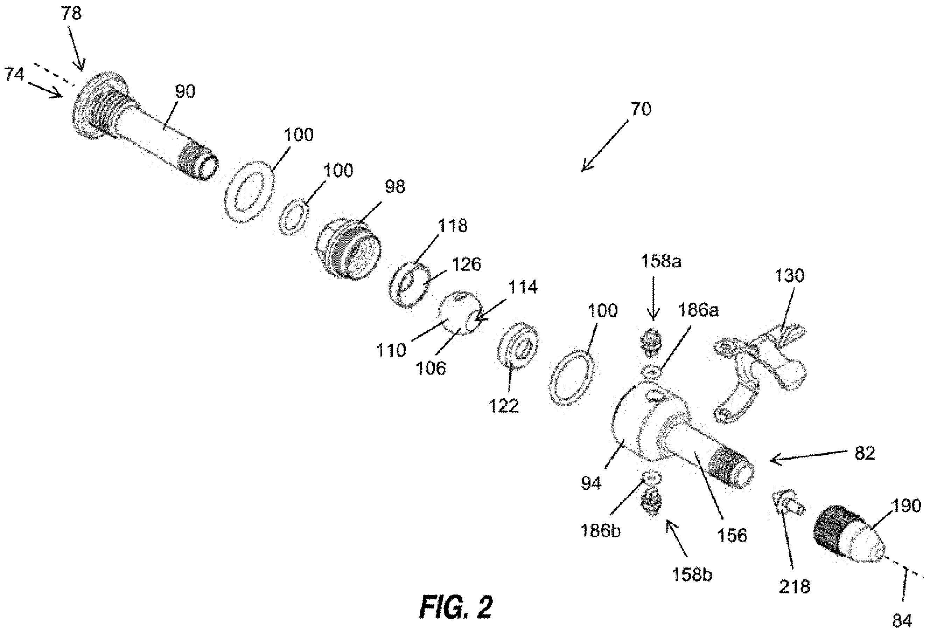

With reference to FIG. 2, in many examples, the valve assembly 70 may be inserted or extend radially inwardly through a first hole in a well portion (e.g., wall) of the rim assembly 38 of FIG. 1 (over which the tire 42 (FIG. 1) is mounted) and, in some examples, through a second hole in an exterior portion (e.g., wall) of the rim assembly 38 (at a portion of the exterior portion that is radially inward of the well surface such as a nose portion of the exterior portion). Further, the valve assembly 70 may extend from the rim assembly 38 toward the axle 26.

The valve assembly 70 may include a valve stem 74 having a first end 78 and a second end 82 opposite the first end 78. Further, the valve stem 74 may be coupled (e.g., threadedly coupled) to the rim assembly 38. In some examples, the valve stem 74 may be coupled to the rim assembly 38 by threading on the valve stem 74 and/or the first main body 90. For example, the threading may be located at or proximal to the first end 78. In some examples, the threading may engage with threading on rim assembly 38, such as, for example, threading located at the perimeter of a hole in a well portion (e.g., wall) of the rim assembly 38 of FIG. 1 (over which the tire 42 (FIG. 1) is mounted). In other examples, the threading may engage with threading of a locking ring that cooperates with the first end 78 to clamp the valve assembly 70 to the rim assembly 38. The second end 82 may be selectively connectable to a fluid source (e.g., a pump, air compressor, etc.) to receive fluid (e.g., air, nitrogen, etc.) to inflate the tire 42 or to add sealant for the tire 42.

As illustrated in FIG. 2, the valve stem 74 may define a longitudinal axis 84. The longitudinal axis 84 may extend along a length of the valve stem 74 between the first end 78 and the second end 82.

The valve stem 74 may define a hollow interior 86 defined along the entire valve stem 74 between the first end 78 and the second end 82. Fluid may flow through the hollow interior 86 to inflate the tire 42. For example, fluid may enter the hollow interior 86 at the second end 82, flow toward the first end 78, and then enter into the tire 42 to inflate the tire 42.

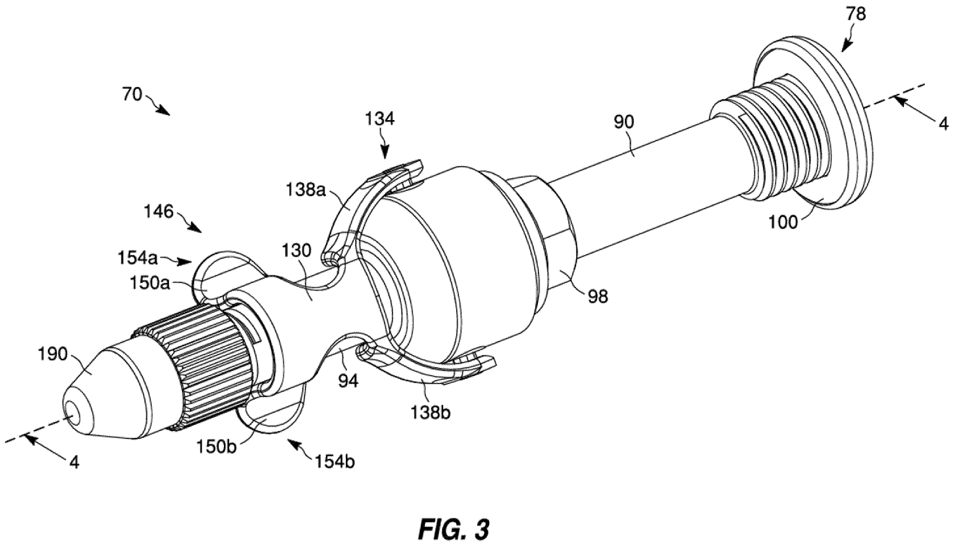

With reference to FIGS. 2 and 3, the valve stem 74 may include one main body, or multiple main bodies. In the illustrated example, the valve stem 74 includes a first main body 90, a second main body 94, and a third main body 98. The first main body 90 may define the first end 78. The second main body 94 may define the second end 82. The third main body 98 may be positioned between the first end 78 and the second end 82.

The first main body 90 may be coupled to the third main body 98. For example, the first main body 90 may be threadably coupled to the third main body 98. In yet other examples, the first main body 90 may be coupled to the third main body 98 with a snap ring, a pin, or other structure. The second main body 94 may also be coupled to the third main body 98. For example, the second main body 94 may be threadably coupled to the third main body 98, or may be coupled to the third main body 98 with a snap ring, a pin, or other structure. The first main body 90 and the second main body 94 may be coupled to opposite sides of the third main body 98. In other examples, the valve stem 74 may include a different number of main bodies (e.g., one, two, etc.) coupled together to form the overall valve stem 74.

The hollow interior 86 of the valve stem 74, as described above, may be defined by each main body of the valve stem 74. In the illustrated example, the hollow interior 86 may collectively be defined by the first main body 90, the second main body 94, and the third main body 98.

With reference to FIG. 2, the valve assembly 70 may include a plurality of gaskets 100 to seal the valve assembly 70. For example, the valve assembly 70 may include at least one gasket 100 positioned between the first main body 90 and the third main body 98. The valve assembly 70 may also, or alternatively, include at least one gasket 100 positioned between the second main body 94 and the third main body 98. The valve assembly 70 may also, or alternatively, include at least one gasket 100 positioned between the first main body 90 and, for example, the tire 42.

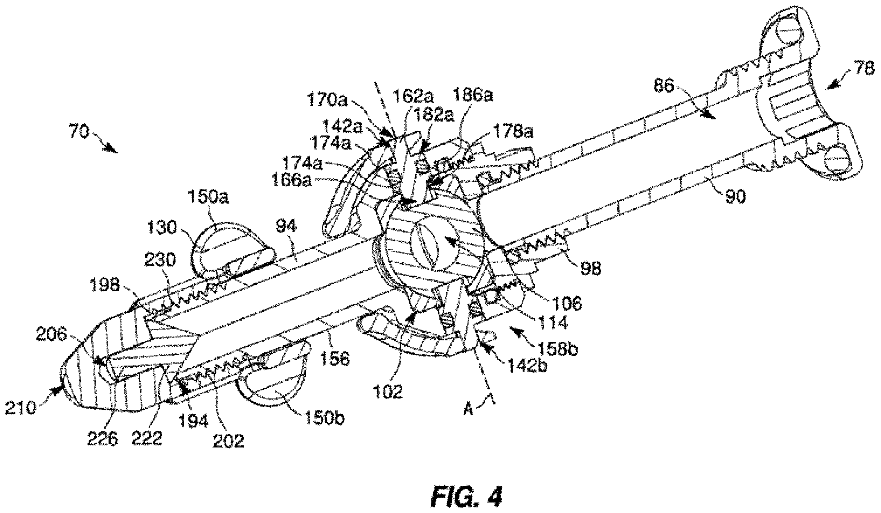

With reference to FIG. 4, the hollow interior 86 of the valve stem 74 may include a valve region 102. The valve region 102 may be sized and shaped to receive at least a portion of a valve. The valve region 102 may be positioned between the first end 78 and the second end 82. In the illustrated example, the valve region 102 is defined by the second main body 94 and the third main body 98. In other examples, the valve region 102 may be defined by other portions of the valve stem 74.

With reference to FIGS. 2 and 4, the valve assembly 70 may include a valve 106 that is adjustable to selectively restrict flow of fluid (e.g., air, nitrogen, etc.) through the hollow interior 86. In the illustrated example, the valve 106 is positioned at least partially in the valve region 102. In other examples, the valve 106 may be positioned in a different portion of the hollow interior 86.

In the illustrated example, the valve 106 is a ball valve. The valve 106 includes a valve body 110. The illustrated valve body 110 is spherical in shape, although other examples may include different shapes and sizes than that illustrated (e.g., cylindrical, etc.).

The valve 106 also includes a bore 114 extending through the valve body 110. The bore 114 may be a through-opening (e.g., having a circular cross-section) that extends linearly through the valve body 110. While a single bore 114 is illustrated, in other examples the valve 106 may include other numbers, arrangements, and/or shapes of bores 114 than that illustrated. In many examples, implementing the valve 106 with a single bore 114 may be desirable to maximize throughput of fluid through the valve 106 and the hollow interior 86.

In many examples, bore 114 can include a bore diameter. The bore diameter can be greater than or equal to an internal diameter of the first main body 90 and/or the third main body 98. Implementing the bore diameter to be as close as possible, equal to, or greater than the internal diameter of the first main body 90 and/or the third main body 98 can be advantageous to maximize throughput of fluid through the valve 106 and the hollow interior 86. In this way, choke points in the hollow interior 86 can be mitigated or eliminated. Maximizing the throughput of fluid through the valve 106 and the hollow interior 86 can be particularly advantageous to facilitate a flow of sealant, which may be more viscous than other fluids (e.g., air, nitrogen), through hollow interior 86. Further, by implementing valve assembly 70 with high throughput, it is possible to avoid disassembling the valve assembly 70 to remove choke points (e.g., a valve core) as is typically necessary for conventional valve assemblies.

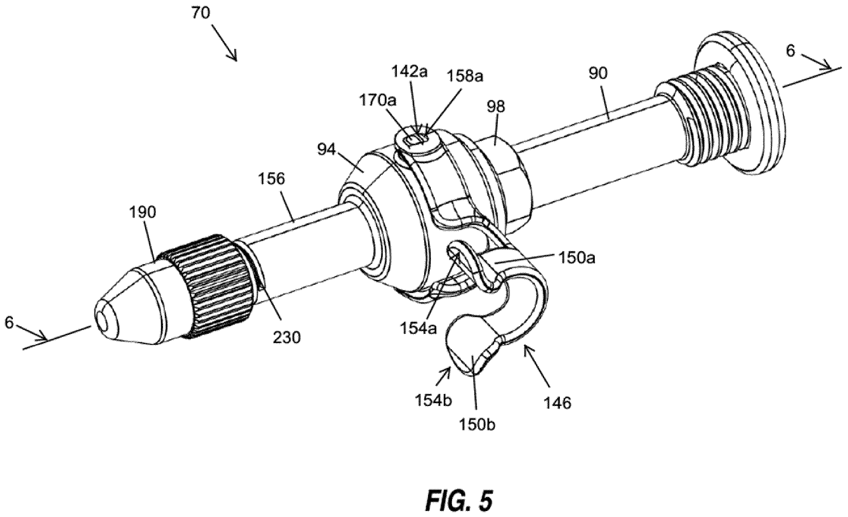

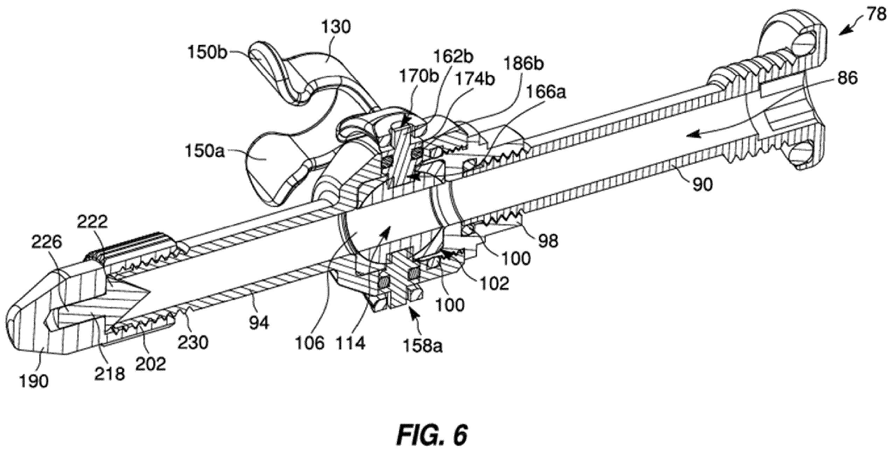

With reference to FIGS. 3-6, the valve 106 may be rotatable about an axis A between a closed position (FIGS. 3 and 4) and an opened position (FIGS. 5 and 6). In the closed position, the bore 114 may be misaligned with the longitudinal axis 84. In the illustrated embodiment, the bore 114 is oriented perpendicular to the longitudinal axis 84 in the closed position. As such, fluid is inhibited or prevented from flowing through the bore 114 when the valve 106 is in the closed position. Stated another way, the valve 106 inhibits or prevents fluid from flowing between the first end 78 and the second end 82 in the closed position. In the closed position, the valve 106 and the valve assembly 70 can maintain a pressurized fluid in tire 42 (FIG. 1).

In the opened position, the bore 114 may be aligned with the longitudinal axis 84. As such, fluid may be allowed to flow through the bore 114 when the valve 106 is in the opened position. Stated another way, the valve 106 allows fluid to flow between the first end 78 and the second end 82 in the opened position.

In other examples, the valve 106 may be a gate valve, a butterfly valve, or any other suitable valve to selectively prevent and allow fluid to flow between the first end 78 and the second end 82.

With reference to FIGS. 2 and 4, in some examples, the valve assembly 70 may include one or more valve seals to inhibit or prevent fluid from flowing around the valve 106. For example, the valve assembly 70 may include a first valve seal 118. The first valve seal 118 may surround a portion of the valve 106. The first valve seal 118 may be positioned in the valve region 102 of the hollow interior 86. The first valve seal 118 may inhibit or prevent fluid from flowing around the valve 106. As such, the fluid may only flow through the bore 114.

The valve assembly 70 may also include a second valve seal 122. The second valve seal 122 may surround a portion of the valve 106. The second valve seal 122 may be positioned in the valve region 102 of the hollow interior 86. The second valve seal 122 may inhibit or prevent fluid from flowing around the valve 106. As such, the fluid may only flow through the bore 114.

In the illustrated example, the first valve seal 118 is positioned on a first side of the valve 106, and the second valve seal 122 is positioned on a second side of the valve 106 opposite the first side. The first valve seal 118 may be positioned between the valve 106 and the first end 78 of the valve stem 74. The first valve seal 118 may be positioned within and supported by the second main body 94 and/or the third main body 98. The second valve seal 122 may be positioned between the valve 106 and the second end 82 of the valve stem 74. The first valve seal 118 may be positioned within and supported by the second main body 94. In other examples, the first valve seal 118 and/or the second valve seal 122 may be positioned differently within the hollow interior 86, and/or may be supported by different portions of the valve stem 74.

In some examples, the first valve seal 118 and the second valve seal 122 are shaped similarly or complementary to the valve 106. In the illustrated example, the first valve seal 118 and the second valve seal 122 each include an arcuate surface 126. The arcuate surface 126 is similarly curved to receive the spherical valve body 110. In other examples having a differently shaped valve 106, the first valve seal 118 and the second valve seal 122 may have any suitable geometry to complement the shape of the valve body 110.

With reference to FIGS. 2-6, the valve assembly 70 may include a lever 130. The lever 130 may be operatively coupled to the valve 106 to adjust the valve 106 between the opened position and the closed position. The lever 130 may include a connection region 134. The connection region 134 may couple the lever 130 to the valve 106.

In the illustrated example, the connection region 134 includes a first connection arm 138a. The first connection arm 138a may include a first connection aperture 142a that extends entirely through the first connection arm 138a. The connection region 134 may further include a second connection arm 138b. The second connection arm 138b may include a second connection aperture 142b that extends entirely through the second connection arm 138b. In other examples, the connection region 134 may include a different number of connection arms. For example, the connection region 134 may include only a single connection arm (e.g., only the first connection arm 138a, or only the second connection arm 138b).

The lever 130 may also include an engagement region 146 (e.g., located opposite the connection region 134). The engagement region 146 may releasably secure the lever 130 to the valve stem 74. For example, the engagement region 146 may include a first flexible arm 150a having a first engagement end 154a. The engagement region 146 may further include a second flexible arm 150b having a second engagement end 154b. In other examples, the engagement region 146 may include a different number of flexible arms that releasably secure the lever 130 to the valve stem 74. For example, the engagement region 146 may include only a single flexible arm (e.g., only the first flexible arm 150a, or only the second flexible arm 150b).

As illustrated in FIGS. 3 and 4, the engagement region 146 may releasably snap onto an exterior surface 156 of the valve stem 74 (e.g., when the valve 106 is moved to the closed position). In some examples, the engagement region 146 may releasably snap onto the first main body 90. The first engagement end 154a and the second engagement end 154b may initially flex away from one another when the first flexible arm 150a and the second flexible arm 150b initially snaps on to the exterior surface 156 of the valve stem 74. The first engagement end 154a and the second engagement end 154b may then flex back toward one another after the first flexible arm 150a and the second flexible arm 150b snap on to the exterior surface 156 of the valve stem 74. As noted above, in some examples the engagement region 146 may include only a single arm (e.g., the first flexible arm 150a). Accordingly, in such an example the first flexible arm 150a may snap onto the exterior surface 156 (or for example onto the first main body 90).

When the engagement region 146 is engaged with or snapped on to the valve stem 74, the first engagement end 154a and the second engagement end may retain the engagement region 146 on the valve stem 74, and for example may retain the valve 106 in the closed position (inhibiting a flow of fluid through the valve assembly 70). In order to disengage the engagement region 146 from the valve stem 74 and permit the valve 106 to be moved to the open position, a force must be applied to the first engagement region 106 that is sufficient to cause the first engagement end 154a and the second engagement end 154b to flex further apart from each other than a width of the second main body 94.

With reference to FIGS. 2 and 4, the valve assembly 70 may also include a first connection assembly 158a. The first connection assembly 158a may connect the lever 130 to the valve 106. The first connection assembly 158a may include a first pivot 162a (e.g., pin) having a first pivot end 166a and a second pivot end 170a located opposite the first pivot end 166a. The first pivot 162a may include a pair of first flanges 174a extending radially from the first pivot 162a. The first flanges 174a may be positioned between the first pivot end 166a and the second pivot end 170a.

The first pivot end 166a may extend into a first valve aperture 178a in the valve 106. The first pivot end 166a and the first valve aperture 178a may define the axis A. In the illustrated example, the first valve aperture 178a extends partially through the valve body 110. However, the first valve aperture 178a does not extend into the bore 114. The first pivot end 166a and the first valve aperture 178a are similarly shaped. The first pivot end 166a and the first valve aperture 178a are shaped such that rotation of the first pivot end 166a causes the valve 106 to rotate with the first pivot 162a. In the illustrated example, the first pivot end 166a and the first valve aperture 178a are oblong shapes. In other examples, the first pivot end 166a and the first valve aperture 178a can have any suitable mating shapes (e.g., keyed shapes), such that rotation of the first pivot 162a causes rotation of the valve 106 about the axis A.

The pair of first flanges 174a may be positioned in a first stem aperture 182a in the valve stem 74. The pair of first flanges 174a and the first stem aperture 182a may define the axis A. In the illustrated example, the first stem aperture 182a extends through the second main body 94. In other examples, the first stem aperture 182a may extend through a different portion of the valve stem 74 adjacent the valve 106. The pair of first flanges 174a and the first stem aperture 182a are similarly shaped. The pair of first flanges 174a and the first stem aperture 182a are shaped such that pair of first flanges 174a may rotate relative to the first stem aperture 182a. In the illustrated example, the pair of first flanges 174a and the first stem aperture 182a are circular.

The first connection assembly 158a may include a first gasket 186a. The first gasket 186a may be positioned between the first flanges 174a. The first gasket 186a may be positioned in the first stem aperture 182a and create a seal with the first stem aperture 182a. The first gasket 186a may inhibit or prevent any fluid from flowing into or out of the first stem aperture 182a. The first gasket 186a may rotate with the first pivot 162a relative to the first stem aperture 182a. Alternatively, the first pivot 162a may rotate relative to the first gasket 186a.

The second pivot end 170a may extend into the first connection aperture 142a. The second pivot end 170a and the first connection aperture 142a may define the axis A. The second pivot end 170a and the first connection aperture 142a may be similarly shaped. The second pivot end 170a and the first connection aperture 142a may be shaped such that rotation of the lever 130 causes rotation of the first pivot 162a. In the illustrated example, the second pivot end 170a and the first connection aperture 142a are oblong shapes. In other examples, the second pivot end 170a and the first connection aperture 142a can have any suitable mating shapes (e.g., keyed shapes), such that rotation of the lever 130 causes rotation of the first pivot 162a.

In some examples, the valve assembly 70 may include only a single connection assembly (e.g., the first connection assembly 158). In other examples, the valve assembly 70 may include more than one connection assembly. For example, the valve assembly 70 may include a second connection assembly 158b. The second connection assembly 158b may include similar components as the first connection assembly 158a. The components of the second connection assembly 158b are labeled similar to like components in the first connection assembly 158a, but are denoted with a suffix "b" instead of "a." For example, and as illustrated in FIG. 6, the second connection assembly 158b may include a second pivot 162b having a first pivot end 166b and a second pivot end 170b. The second pivot 162b may further include a pair of second flanges 174b.

With continued reference to FIG. 6, the valve 106 may include a second valve aperture 178b. The second valve aperture 178b may be positioned opposite the first valve aperture 178a. The axis A may extend through the first valve aperture 178a and the second valve aperture 178b. The first pivot end 166b of the second connection assembly 158b may extend into the second valve aperture 178b. The first pivot end 166b and the second valve aperture 178b may engage each other and function in the same way as described above with respect to the first pivot end 166a of the first connection assembly 158a and the first valve aperture 178a.

The valve stem 74 may include a second stem aperture 182b. The second stem aperture 182b may be positioned opposite the first stem aperture 182a. The axis A may extend through the first stem aperture 182a and the second stem aperture 182b. The pair of second flanges 174b may be positioned in the second stem aperture 182b. The pair of second flanges 174b and the second stem aperture 182b may engage each other and function in the same way as described above with respect to the pair of first flanges 174a and the first stem aperture 182a.

The second pivot end 170b of the second connection assembly 158b may extend into the second connection aperture 142b. The second pivot end 170b and the second connection aperture 142b may engage each other and function in the same way as described above with respect to the second pivot end 170b of the first connection assembly 158a and the first connection aperture 142a.

In the illustrated example, the valve 106 may be rotated about the axis A between the opened position and the closed position by the lever 130. Rotation of the lever 130 may cause the first connection assembly 158a and the second connection assembly 158b to rotate relative to the valve stem 74. Rotation of the first connection assembly 158a and the second connection assembly 158b may cause the valve 106 to rotate relative to the valve stem 74, the first valve seal 118, and the second valve seal 122.

As described above, the valve 106 may be in the closed position when the engagement region 146 of the lever 130 is snapped on to the valve stem 74. As such, fluid may not flow between the first end 78 and the second end 82 of the valve stem 74 when the engagement region 146 of the lever 130 is snapped on to the valve stem 74.

The valve 106 may be in the opened position when the lever 130 is disengaged from the valve stem 74 and pivoted away from the valve stem 74. As such, fluid may flow between the first end 78 and the second end 82 of the valve stem 74 when the engagement region 146 of the lever 130 is disengaged from the valve stem 74.

In the illustrated example, the valve 106 is in the opened position when the lever 130 is pivoted ninety (90) degrees relative to the valve stem 74. Other examples may include different values or ranges of values (e.g., 80 degrees, 100 degrees). In the opened position, the lever 130 may extend perpendicular to the longitudinal axis 84 of the valve stem 74. In other examples, the valve 106 may be in the opened position when the lever 130 is pivoted any suitable angle to allow fluid to flow through the bore 114.

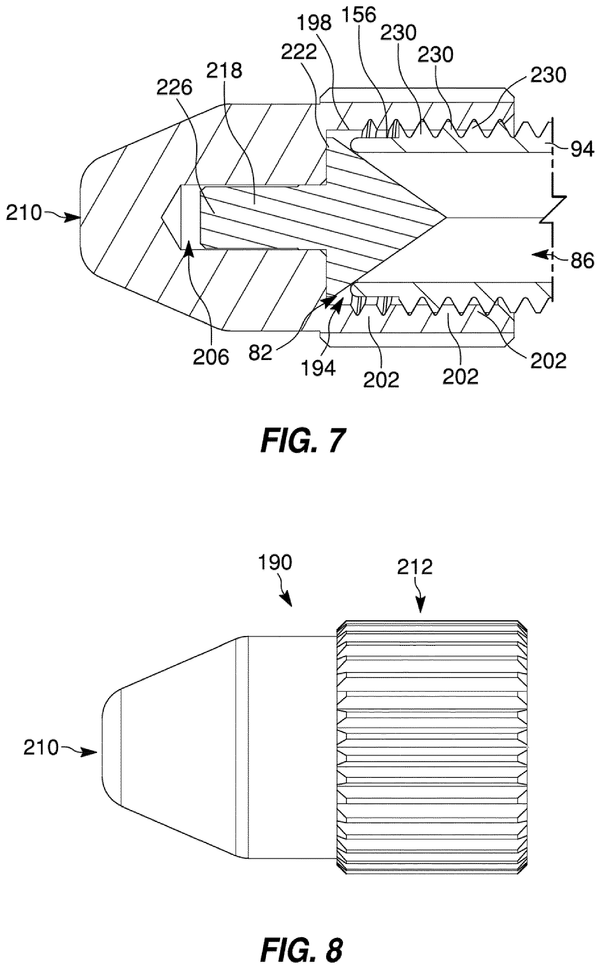

With reference to FIGS. 2-11, the valve assembly 70 may also, or alternatively, include a valve cap 190. As illustrated in FIGS. 7-11, the valve cap 190 may include a main cap body 192. The main cap body 192 may include a recess 194 defined at least in part by an interior surface 198 (FIG. 7) of the main cap body 192. The main cap body 192 may also include a set of interior threads 202 along the interior surface 198.

With reference to FIGS. 7, 9, and 10, the main cap body 192 may include a channel (or channels 206). The channel 206 may further define part of the recess 194. The channel 206 may have a smaller diameter than a remaining portion of the recess 194. The channel 206 may be positioned between the interior threads 202 and a closed end 210 of the main cap body 192.

With reference to FIGS. 8-10, the main cap body 192 may include a textured outer surface 212 to improve grip. In the illustrated example, the textured outer surface 212 is a splined outer surface 212. In other examples, the main cap body 192 can include any suitable texture to improve grip.

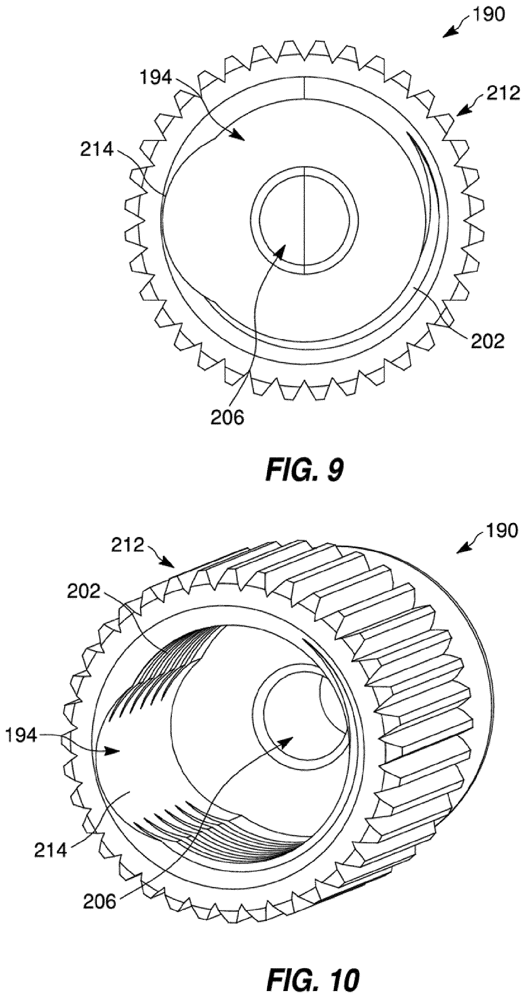

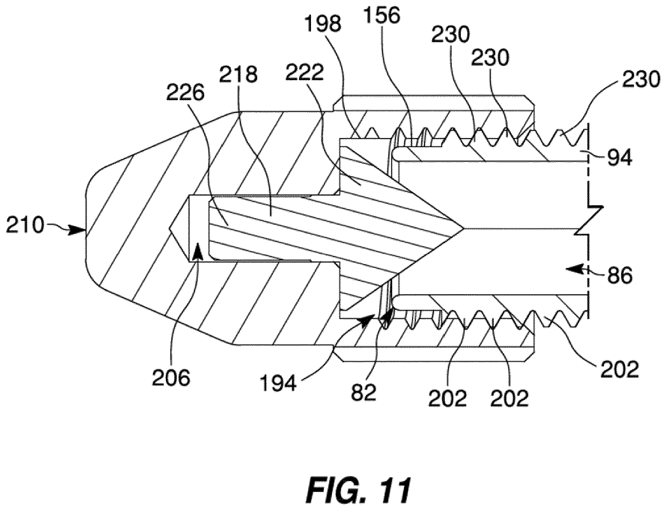

With reference to FIGS. 10 and 11, the interior surface 198 of the main cap body 192 may define a relief 214. The relief 214 may be a portion of the interior surface 198 that has no interior threads 202. The relief 214 may extend longitudinally, for example, along a length of the recess 194 within the main cap body 192. In some examples, the relief 214 may be aligned with the longitudinal axis 84 of the valve stem 74.

With continued reference to FIGS. 7-11, the valve cap 190 may include a seal 218 positioned within the main cap body 192. The seal 218 may selectively engage the valve stem 74 (e.g., the second main body 94) to inhibit flow of fluid through the valve stem 74.

The seal 218 may include a head 222 that selectively engages and disengages the valve stem 74. In the illustrated example, the head 222 is a cone-shaped head 222. In other examples, the head 222 may have any suitable shape to inhibit flow of fluid through the valve stem 74.

In some examples, the seal 218 further includes a stem 226 extending from the head 222. The stem 226 may be received, for example, in the channel 206 to secure the seal 218 within the recess 194.

The valve cap 190 may be selectively coupled to the valve stem 74. In some examples, the valve cap 190 may be selectively coupled to the second end 82 of the valve stem 74. The valve stem 74 may include a set of exterior threads 230 along the exterior surface 156. The exterior threads 230 may be located adjacent the second end 82 of the valve stem 74. The interior threads 202 of the valve cap 190 may engage the exterior threads 230 of the valve stem 74 to selectively couple the valve cap 190 to the valve stem 74.

The valve cap 190 may be movable between a first position (FIG. 7) and a second position (FIG. 11). The first position may be referred to as a sealed position. The second position may be referred to as an unsealed position.

In the sealed position (FIG. 7), the head 222 may be pressed against the valve stem 74. For example, the head 222 may be pressed against the second end 82 of the valve stem 74. When the head 222 is pressed against the valve stem 74, fluid may be inhibited from flowing out of the hollow interior 86. In the sealed position, the head 222 may extend at least partially into the hollow interior 86 of the valve stem 74.

In the unsealed position (FIG. 11), the head 222 may be spaced away from the second end 82 of valve stem 74. When the head 222 is spaced away from the second end 82 of the valve stem 74, a limited amount of fluid may flow out of the hollow interior 86. Stated another way, fluid may bleed out of the hollow interior 86 when the head 222 is spaced away from the second end 82 of the valve stem 74.

The relief 214 described above may allow the fluid to flow out of (bleed out of) the hollow interior 86 (e.g., when the valve 106 is in the opened position). The relief 214 may be shaped and sized to meter or provide a desired flow rate of fluid through the hollow interior 86 when the head 222 is in the unsealed position.

During operation, the valve cap 190 and its seal 218 may initially be secured in the sealed position by the threaded engagement between the interior threads 202 and the exterior threads 230. The valve 106 may be secured in the closed position by the lever 130 snapped to the valve stem 74. The force required to remove the lever 130 from the valve stem 74 may prevent the lever 130 from accidentally moving toward the opened position. For example, a user may accidentally bump or kick the lever 130. The engagement, however, may be sufficiently strong to inhibit the lever 130 from disengaging with the exterior surface 156 of the valve stem 74 during such accidental contact.

A user may, for example, desire to introduce fluid to a tire (e.g., the tire 42). To introduce fluid into the tire 42, the valve cap 190 may be removed entirely from the valve stem 74, providing access to the second end 82. A fluid source (e.g., a compressor, a sealant bottle, etc.) may then be connected to the second end 82. The lever 130 may then be manually gripped by a user, disengaged from the valve stem 74, and pivoted relative to valve stem 74. As the lever 130 pivots about the axis A, the first pivot 162a, the second pivot 162b, and the valve 106 may rotate with the lever 130. The lever 130 may be pivoted until the valve 106 is in the opened position. The fluid source may then introduce fluid into the second end 82 and flow through the hollow interior 86 along the longitudinal axis 84. The fluid may flow from the second end 82, through the bore 114, through the first end 78, and into the tire 42 to inflate the tire 42.

Once sufficient fluid has entered the tire 42, the fluid source may stop introducing fluid into the hollow interior 86. The lever 130 may be manually gripped by a user and pivoted until the engagement region 146 again snaps on to the exterior surface 156 and the valve 106 is in the closed position. The interior threads 202 of the valve cap 190 may be returned to engagement with the exterior threads 230 of the valve stem 74. The valve cap 190 may then be moved to the sealed position. In some examples, the valve assembly 70 does not include any check valves. Rather, the user instead may remove the valve cap 190, attach a source of pressure (e.g., a pressure hose), open the valve 106 to the opened position, add pressure, close the valve 106, and then remove the source of pressure.

In some examples a user may desire to remove a small amount of fluid from the tire. To remove fluid from the tire, the lever 130 may first be manually gripped by a user, disengaged from the valve stem 74, and pivoted relative to valve stem 74. As the lever 130 pivots about the axis A, the first pivot 162a, the second pivot 162b, and the valve 106 may rotate with the lever 130. The lever 130 may be pivoted until the valve 106 is in the opened position. With the lever 130 in the opened position, fluid from the tire may flow from the first end 78, through the bore 114, and toward the valve cap 190. However, the sealed engagement of the valve cap 190 on the second end 82 of the valve stem 74 prevents fluid from exiting the hollow interior 86 when the valve cap 190 is in the sealed position. To bleed fluid from the tire, the valve cap 190 may be moved toward an unsealed position (e.g., by rotating the main cap body 192). In the unsealed position (FIG. 11), the head 222 is spaced apart from the second end 82 of the valve stem 74. The fluid can then pass (bleed) out of the hollow interior 86 through the second end 82 along the relief 214, and out of the valve cap 190. The rate at which pressurized fluid is bled from the tire can be controlled by the user by controlling the amount that the seal 218 is spaced from the end of the valve stem 74.

Once sufficient fluid has exited the tire, the valve cap 190 may be adjusted to the sealed position. The lever 130 may then be manually gripped by a user and pivoted until the engagement region 146 snaps on to the exterior surface 156 and the valve 106 is in the closed position.

Some of the examples may be further described by reference to the following numbered clauses:
Clause 1 - A tire valve assembly for a tire, the tire valve assembly comprising:
   a valve stem defining a hollow interior; and
   a valve positioned within the hollow interior, wherein the valve is manually movable between a closed position to inhibit movement of fluid through the valve stem, and an open position to facilitate movement of fluid through the valve stem to inflate the tire.
Clause 2 - The tire valve assembly of clause 1, wherein the valve is a ball valve.
Clause 3 - The tire valve assembly of clause 1 or clause 2, further comprising a lever coupled to the valve, wherein the lever is configured to be manually gripped and rotated to rotate a position of the valve within the valve stem.
Clause 4 - The tire valve assembly of clause 3, wherein the lever includes an engagement region having arms configured to engage and removably snap onto an exterior of the valve stem.
Clause 5 - The tire valve assembly of clause 4, wherein the engagement region includes a first flexible arm having a first end, and a second flexible arm having a second end, wherein the first end and the second end are configured to flex away from one another when the engagement region initially snaps onto the exterior of the valve stem, and wherein the first end and the second end are configured to flex back toward one another after the engagement region snaps onto the exterior of the valve stem.
Clause 6 - The tire valve assembly of any of the preceding clauses, wherein the valve stem includes a first main body defining a first end of the valve stem and a second main body defining a second end of the valve stem.
Clause 7 - The tire valve assembly of clause 6, further comprising a lever coupled to the second main body, wherein the lever is configured to be manually gripped and rotated to rotate a position of the valve within the valve stem.
Clause 8 - The tire valve assembly of clause 7, wherein the valve is a ball valve, wherein the lever is coupled to the ball valve, and wherein the tire valve assembly further includes a first valve seal positioned on a first side of the ball valve within the second main body and a second valve seal positioned on a second, opposite side of the ball valve within the second main body.
Clause 9 - The tire valve assembly of clause 8, wherein the valve stem includes a third main body positioned between the first main body and the second main body, wherein the first main body is threadably coupled to the third main body, and wherein the third main body is threadably coupled to the first main body.
Clause 10 - The tire valve assembly of clause 9, wherein the first valve seal is engaged with a portion of the third main body.
Clause 11 - The tire valve assembly of any of the preceding clauses, further comprising a valve cap coupled to the valve stem, wherein the valve cap is adjustable between a first position to inhibit a flow of fluid out of the hollow interior, and a second position to facilitate a limited flow of fluid out of the hollow interior.
Clause 12 - The tire valve assembly of clause 11, wherein the valve cap includes a main cap body and a seal coupled to the main cap body, wherein the seal is configured to be pressed against the valve stem in the first position to inhibit the flow of fluid out of the hollow interior, and wherein the seal is configured to be spaced away from the valve stem in the second position to facilitate the limited flow of fluid out of the hollow interior.
Clause 13 - The tire valve assembly of clause 12, wherein the valve stem includes a set of exterior threads along an exterior surface of the valve stem, and the valve cap includes a set of interior threads along an interior surface of the valve cap, wherein the set of interior threads are configured to engage the set of exterior threads to move the cap between the first position and the second position.
Clause 14 - The tire valve assembly of clause 13, wherein a portion of the interior surface of the valve cap defines a relief having no threads.
Clause 15 - A tire valve assembly for a tire, the tire valve assembly comprising:
   a valve stem defining a hollow interior; and
   a valve cap coupled to the valve stem, wherein the valve cap includes a main cap body and a seal coupled to the main cap body, wherein the valve cap is adjustable relative to the valve stem between a first position where the seal is pressed against the valve stem to inhibit a flow of fluid out of the hollow interior, and a second position where the seal is spaced away from the valve stem to facilitate a limited flow of fluid out of the hollow interior.
Clause 16 - The tire valve assembly of clause 15, wherein the valve stem includes a set of exterior threads along an exterior surface of the valve stem, and the valve cap includes a set of interior threads along an interior surface of the valve cap, wherein the set of interior threads are configured to engage the set of exterior threads to move the cap between the first position and the second position.
Clause 17 - The tire valve assembly of clause 16, wherein a portion of the interior surface of the valve cap defines a relief having no threads.
Clause 18 - The tire valve assembly of clause 17, wherein the relief is positioned such that when the valve cap is adjusted to the second position, the limited flow of fluid may pass out of the hollow interior and then along the relief and out of the valve cap.
Clause 19 - The tire valve assembly of any of clauses 16-18, wherein the seal includes a cone-shaped head configured to extend at least partially into the hollow interior in the first position.
Clause 20 - The tire valve assembly of clause 19, wherein the main cap body defines a recess, and wherein a portion of the seal is positioned within the recess.

Various features and advantages of the disclosure are set forth in the following claims.

## Claims

1. A tire valve assembly for a tire, the tire valve assembly comprising:
a valve stem defining a hollow interior; and
a valve positioned within the hollow interior, wherein the valve is manually movable between a closed position to inhibit movement of fluid through the valve stem, and an open position to facilitate movement of fluid through the valve stem to inflate the tire.

2. The tire valve assembly of claim 1, wherein the valve is a ball valve.

3. The tire valve assembly of claim 1 or claim 2, further comprising a lever coupled to the valve, wherein the lever is configured to be manually gripped and rotated to rotate a position of the valve within the valve stem.

4. The tire valve assembly of claim 3, wherein the lever includes an engagement region having arms configured to engage and removably snap onto an exterior of the valve stem.

5. The tire valve assembly of claim 4, wherein the engagement region includes a first flexible arm having a first end, and a second flexible arm having a second end, wherein the first end and the second end are configured to flex away from one another when the engagement region initially snaps onto the exterior of the valve stem, and wherein the first end and the second end are configured to flex back toward one another after the engagement region snaps onto the exterior of the valve stem.

6. The tire valve assembly of any of the preceding claims, wherein the valve stem includes a first main body defining a first end of the valve stem and a second main body defining a second end of the valve stem.

7. The tire valve assembly of claim 6, further comprising a lever coupled to the second main body, wherein the lever is configured to be manually gripped and rotated to rotate a position of the valve within the valve stem.

8. The tire valve assembly of claim 7, wherein the valve is a ball valve, wherein the lever is coupled to the ball valve, and wherein the tire valve assembly further includes a first valve seal positioned on a first side of the ball valve within the second main body and a second valve seal positioned on a second, opposite side of the ball valve within the second main body.

9. The tire valve assembly of claim 8, wherein the valve stem includes a third main body positioned between the first main body and the second main body, wherein the first main body is threadably coupled to the third main body, and wherein the third main body is threadably coupled to the first main body.

10. The tire valve assembly of claim 9, wherein the first valve seal is engaged with a portion of the third main body.

11. The tire valve assembly of any of the preceding claims, further comprising a valve cap coupled to the valve stem, wherein the valve cap is adjustable between a first position to inhibit a flow of fluid out of the hollow interior, and a second position to facilitate a limited flow of fluid out of the hollow interior.

12. The tire valve assembly of claim 11, wherein the valve cap includes a main cap body and a seal coupled to the main cap body, wherein the seal is configured to be pressed against the valve stem in the first position to inhibit the flow of fluid out of the hollow interior, and wherein the seal is configured to be spaced away from the valve stem in the second position to facilitate the limited flow of fluid out of the hollow interior.

13. The tire valve assembly of claim 12, wherein the valve stem includes a set of exterior threads along an exterior surface of the valve stem, and the valve cap includes a set of interior threads along an interior surface of the valve cap, wherein the set of interior threads are configured to engage the set of exterior threads to move the cap between the first position and the second position.

14. The tire valve assembly of claim 13, wherein a portion of the interior surface of the valve cap defines a relief having no threads.
